# EUROPEAN PATENT APPLICATION

(11) **EP 3 796 278 A1**
(43) Date of publication of application: **24.03.2021**
(21) Application number: 20189805.3
(22) Date of filing: 06.08.2020
(51) Int. Cl.: G07G 1/00, G06Q 20/20

(54) **CHECKOUT APPARATUS, CHECKOUT METHOD PERFORMED WITH CHECKOUT APPARATUS, AND NON-TRANSITORY COMPUTER READABLE MEDIUM**

(30) Priority: 18.09.2019 JP 2019169676
(71) Applicant: Toshiba Tec Kabushiki Kaisha, Shinagawa-ku Tokyo 141-8562 (JP)
(72) Inventor: Sakurai, Wataru, Tokyo, 141-8562 (JP)
(74) Representative: Hoffmann Eitle

(57) **Abstract**

A checkout apparatus includes an input device through which an instruction to start checkout settlement processing is input, a wireless tag reader configured to read tag information from a wireless tag attached to a commodity in first and second areas, and a processor. The processor is configured to, when the wireless tag reader reads tag information from a wireless tag attached to a commodity in either the first area or the second area, register the tag information in a memory, and upon receipt of an input of the instruction, perform settlement processing using the registered tag information. The processor determines whether commodities to be purchased have been moved from the first area to the second area and controls the input device to not accept the input of the instruction until all commodities are determined to have been moved.

## Description

### CROSS-REFERENCE TO RELATED APPLICATION

This application is based upon and claims the benefit of priority from Japanese Patent Application No. 2019-169676, filed September 18, 2019, the entire contents of which are incorporated herein by reference.

### FIELD

Embodiments described herein relate generally to a checkout apparatus, a method performed thereby, and a non-transitory computer readable medium.

### BACKGROUND

In retail stores or supermarkets, a commodity sales data processing apparatus, such as a self-service checkout apparatus and a self-service POS (point-of-sale) terminal, is widely used. Customers use such apparatuses and perform operations relating to product sales registration processing and payment processing by themselves.

Recently, in order to facilitate operations relating to sales registration for commodities, a commodity sales data processing apparatus has been developed that reads commodity information from wireless tags (e.g., radio-frequency identification (RFID) tags, electronic tags, or IC tags) which have been attached to the commodities and performs sales registration based on the commodity information associated with the tags. For example, the commodity sales data processing apparatus has an antenna embedded in a checkout counter, and once a shopping basket storing commodities is placed on the checkout counter, the commodity information for the items in the shopping basket is read from the wireless tags attached to each of the individual commodities in the basket in a batch (collective) process.

However, the commodity sales data processing apparatus sometimes fails to read some wireless tags because of the positional relationship between the wireless tags and the antenna or the particular arrangement of items in the shopping basket.

Therefore, it has been considered to install another antenna in another area adjacent to an area where the shopping basket is placed so that a wireless tag can be read when each commodity is taken out from the shopping basket and placed in the other area. One example of the other area is an area where commodities are packed in a bag or the like. Therefore, any commodity which has not been successfully read while in the shopping basket, can be read via the second antenna when the commodities are being packed in a bag. In such a scheme, the store can reduce the number of commodities left unread.

However, such a scheme does not work if some customers do not follow the expected procedure and do not pack an unread item into a bag in the designated area where the second antenna has been installed. Therefore, since it is fairly commonplace for a customer not to move commodities/items to the second area for bagging or the like, there is a demand for a technique that prevents the failure of the second read in such designated bagging areas or the like.

### SUMMARY OF THE INVENTION

One of the objects of the present invention is to improve prior art techniques and overcome at least some of the prior art problems as for instance above illustrated.

According to a first aspect of the invention, it is provided a checkout apparatus, comprising an input device through which an instruction to start checkout settlement processing is input; a wireless tag reader configured to read tag information from a wireless tag in a first area and a second area; and a processor configured to: register tag information in a memory when the wireless tag reader reads tag information from a wireless tag in either the first area or the second area; and perform checkout settlement processing based on the registered tag information upon receipt of an input of the instruction to start checkout settlement processing via the input device, wherein the processor is further configured to determine whether commodities have been moved from the first area to the second area and control the input device to not accept the input of the instruction to start checkout settlement processing until all commodities placed in the first area are determined to have been moved to the second area.

Optionally, in the checkout apparatus according to the first aspect of the invention, the processor determines that a commodity has been moved from the first area to the second area when the wireless tag reader reads a wireless tag in the second area.

Optionally, in the checkout apparatus according to the first aspect of the invention, the processor determines that a commodity has been moved from the first area to the second area when the wireless tag reader reads a wireless tag in the second area providing tag information matching tag information from a wireless tag read in the first area.

Optionally, the checkout apparatus according to the first aspect of the invention further comprises a scale in the second area, wherein the processor determines that the commodities have been moved from the first area to the second area when the scale detects a change in weight.

Optionally, in the checkout apparatus according to the first aspect of the invention, the processor is further configured to acquire an expected weight of a commodity that has been placed in the second area using tag information, and the processor determines that all commodities have been moved from the first area to the second area when the scale measures a weight that is substantially identical to a summed total of expected weights of the commodities detected in the first area according to tag information acquired from wireless tags in the first area.

Optionally, in the checkout apparatus according to the first aspect of the invention, the processor determines that the all commodities have been moved from the first area to the second area when the wireless tag reader reads, in the second area, all wireless tags that were read in the first area.

Optionally, in the checkout apparatus according to the first aspect of the invention, the first and second areas are on a countertop.

Optionally, in the checkout apparatus according to the first aspect of the invention, the wireless tag reader has a first antenna and a second antenna respectively positioned to read wireless tags in the first and second areas.

Optionally, in the checkout apparatus according to the first aspect of the invention, the input device is a touch display showing a button through which the instruction to start checkout settlement processing is input, and the button is disabled until all commodities are determined to have been moved from the first area to the second area.

Optionally, in the checkout apparatus according to the first aspect of the invention, the input device is between the first and second areas.

According to a second aspect of the invention, it is provided a method performed by a checkout apparatus having an input device through which an instruction to start checkout settlement processing is input, the method comprising: reading tag information from a wireless tag attached to a commodity in either a first area or a second area using a wireless tag reader, and then registering the tag information in a memory; performing checkout settlement processing according to the registered tag information upon receipt of an input of the instruction to start checkout settlement processing via the input device; determining whether all commodities to be purchased have been moved from the first area to the second area; and controlling the input device to not accept the input of the instruction until all the commodities are determined to have been moved to the second area.

Optionally, in the method according to the second aspect of the invention, a commodity is determined to have been moved from the first area to the second area when a wireless tag attached to the commodity is read in the second area.

Optionally, in the method according to the second aspect of the invention, a commodity is determined to have been moved from the first area to the second area when tag information from a wireless tag previously read in the first area is read from a wireless tag in the second area.

Optionally, the method according to the second aspect of the invention further comprises detecting a change in weight using a scale in the second area, wherein a commodity is determined to have been moved from the first area to the second area when a change in weight is detected using the scale.

Optionally, the method according to the second aspect of the invention further comprising acquiring an expected weight of a commodity using tag information, wherein a commodity is determined to have been moved from the first area to the second area when the weight change detected by the scale is substantially identical with the expected weight of the commodity.

Optionally, in the method according to the second aspect of the invention, all commodities are determined to have been moved from the first area to the second area when all wireless tags read in the first area are also read in the second area.

Optionally, in the method according to the second aspect of the invention, the first and second area are formed on a countertop.

Optionally, in the method according to the second aspect of the invention, the wireless tag reader has first and second antennas respectively under the first and second areas on the counter table.

Optionally, in the method according to the second aspect of the invention, the input device is a touch display showing a button through which the instruction to start checkout settlement processing is input, and the button is disabled until all commodities are determined to have been moved from the first area to the second area.

According to a third aspect of the invention, it is provided a non-transitory computer readable medium storing a program causing a computer, which has an input device through which an instruction to start checkout settlement processing is input, to execute a method comprising: reading tag information from a wireless tag in either a first area or a second area using a wireless tag reader, and then registering the tag information in a memory; performing checkout settlement processing using the registered tag information upon receipt of an input of the instruction to start checkout settlement processing via the input device; determining whether commodities have been moved from the first area to the second area; and controlling the input device to not accept the input of the instruction to start checkout settlement process until all commodities placed in the first area are determined to have been moved to the second area.

### DESCRIPTION OF THE DRAWINGS

FIG. 1 is an exterior perspective view illustrating a self-service checkout apparatus according to a first embodiment.
FIG. 2 is a diagram schematically illustrating the internal structure of a checkout counter according to a first embodiment.
FIG. 3 is a diagram for explaining movements of commodities in a use of a self-service checkout apparatus.
FIG. 4 is a hardware block diagram of a self-service checkout apparatus.
FIG. 5 is a functional block diagram of a POS terminal according to a first embodiment.
FIG. 6 is a flowchart of commodity sales data processing performed by a self-service checkout apparatus.
FIG. 7 is a functional block diagram of a POS terminal according to a modification of a first embodiment.
FIG. 8 is a flowchart of commodity sales data processing performed by a self-service checkout apparatus according to a modification of a first embodiment.
FIG. 9 is a diagram schematically illustrating the internal structure of a checkout counter according to a second embodiment.
FIG. 10 is a hardware block diagram of a self-service checkout apparatus according to a second embodiment.
FIG. 11 is a functional block diagram of a POS terminal according to a second embodiment.
FIG. 12 is a diagram schematically illustrating the internal structure of a checkout counter according to a modification of a second embodiment.
FIG. 13 is a hardware block diagram of a self-service checkout apparatus according to a modification of a second embodiment.

### DETAILED DESCRIPTION

One or more embodiments provide a commodity sales data processing apparatus that performs reading of wireless tags in a first area and a second area.

According to an embodiment, a checkout apparatus includes an input device through which an instruction to start checkout settlement processing can be input, a wireless tag reader configured to read tag information from wireless tags in first and second areas, and a processor. The processor is configured to, when the wireless tag reader reads tag information from a wireless tag attached to a commodity in either the first area or the second area, register the tag information in a memory, and upon receipt of an input of the instruction to start checkout settlement processing via the input device, perform checkout processing using the registered tag information. The processor is further configured to determine whether commodities have been moved from the first area to the second area, and control the input device to not accept the input of the instruction to start checkout settlement processing until all commodities are determined to have been moved to the second area.

### [First Embodiment]

Certain example embodiments are explained below with reference to the drawings. In the example embodiments, a commodity sales data processing apparatus is described as a self-service checkout apparatus with which customers themselves perform operations relating to sales registration and a payment process.

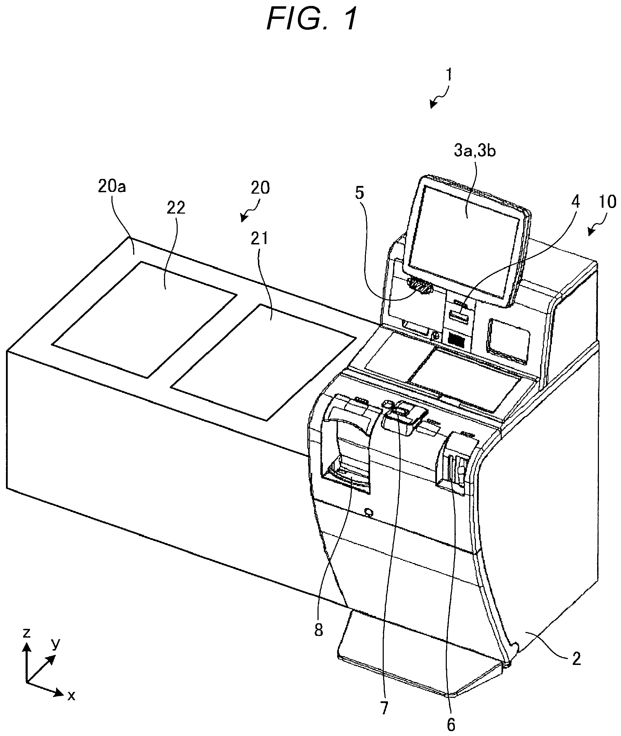

FIG. 1 is an exterior perspective view illustrating a self-service checkout apparatus 1 according to a first embodiment. The self-service checkout apparatus 1 is an example of the commodity sales data processing apparatus and is used in a store such as a supermarket.

The self-service checkout apparatus 1 includes a POS terminal 10 and a checkout counter 20.

A main body 2 of the POS terminal 10 includes a monitor 3b, on the surface of which a touch panel 3a is disposed. For example, the monitor 3B is a liquid crystal display.

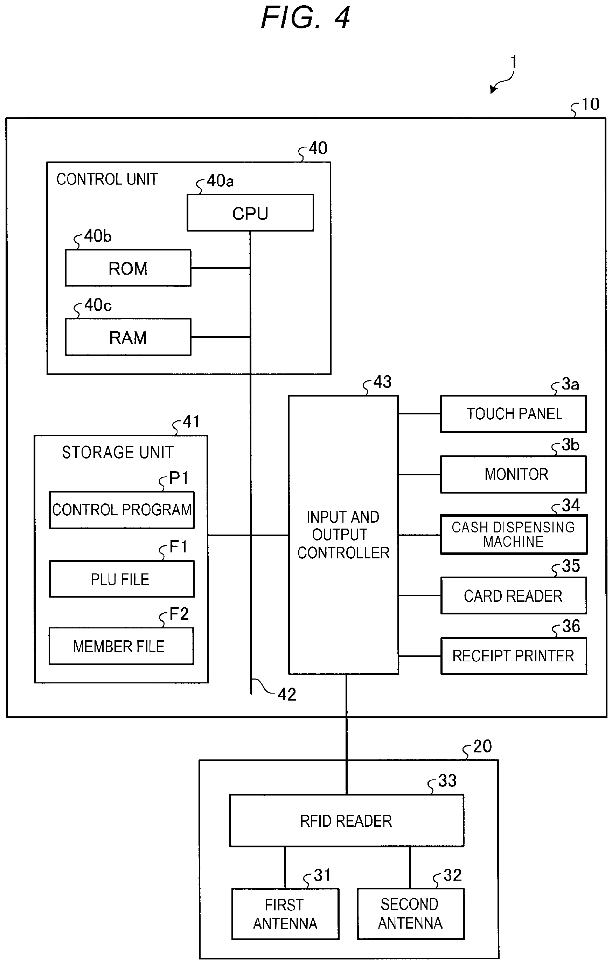

The main body 2 includes a card insertion port 4 for inserting a member card or a credit card of a customer during payment or settlement and a receipt issue port 5 for issuing a receipt. The card insertion port 4 communicates with a card reader 35 (see FIG. 4) as explained further below. The receipt issue port 5 communicates with a receipt printer 36 (see FIG. 4) as explained further below.

The main body 2 further includes a bill depositing and dispensing port 6 for depositing bills for settlement and receiving bills, a coin depositing port 7 for depositing coins during settlement, and a coin dispensing port 8 for receiving coins. The bill depositing and dispensing port 6, the coin depositing port 7, and the coin dispensing port 8 communicate with a cash dispensing machine 34 (see FIG. 4).

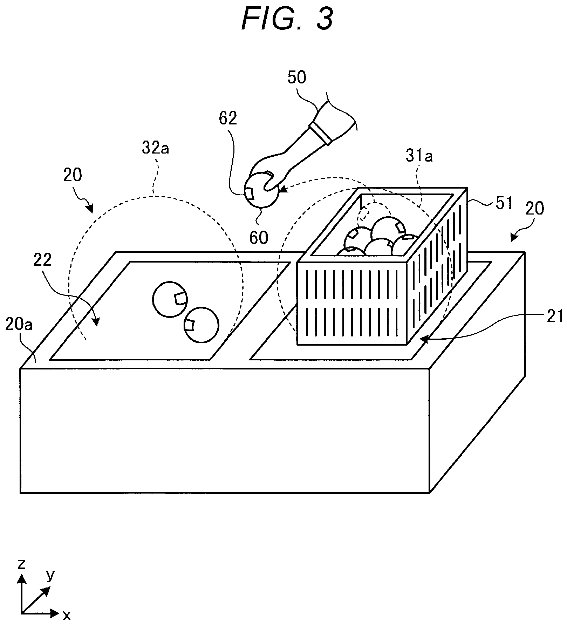

The checkout counter 20 includes a top plate 20a. In one example, the checkout counter 20 and/or the top plate 20a are included in a countertop. The top plate 20a is a substantially flat plate. The top plate 20a includes a first placing area 21 and a second placing area 22. For example, a basket 51, in which commodities 60 be purchased are stored, is placed in the first placing area 21 (see FIG. 3) . The second placing area 22 is an area to which the commodities 60 are moved from the first placing area 21.

The top plate 20a (and thus each of the first placing area 21 and the second placing area 22) is formed of, for example, wood or acrylic that transmits radio waves radiated from a first antenna 31 and a second antenna 32. It is desirable to make the first placing area 21 and the second placing area 22 visibly distinct from each other and other portions of the top plate 20a by using markings or to form the first placing area 21 and the second placing area 22 to have different colors or materials from the other portions of the top plate 20a such that customers can easily recognize these areas.

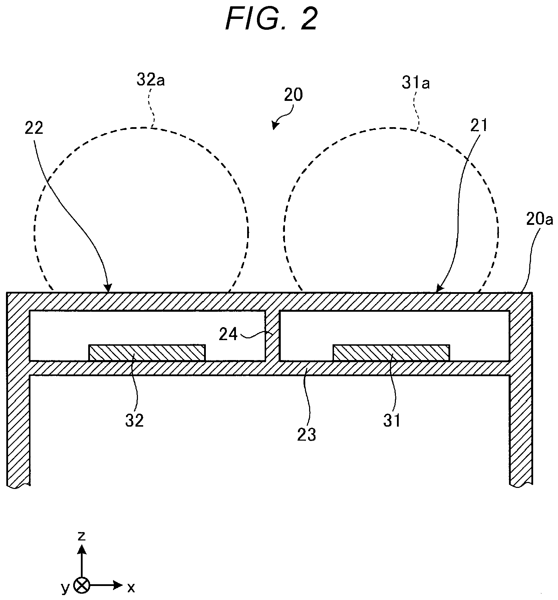

FIG. 2 is a diagram schematically illustrating the internal structure of the checkout counter 20. The checkout counter 20 includes, below the top plate 20a, a first partition plate 23 parallel to the top plate 20a. Between the top plate 20a and the first partition plate 23, a second partition plate 24 for partitioning the first placing area 21 and the second placing area 22 is disposed along a z direction orthogonal to the top plate 20a. The second partition plate 24 may be formed of a member that transmits a radio wave or may be formed of a material that blocks or reflects a radio wave.

A first antenna 31 is set below the first placing area 21 of the first partition plate 23. A second antenna 32 is set below the second placing area 22 of the first partition plate 23.

The first antenna 31 and the second antenna 32 radiate radio waves upward (in this context, the z-axis positive direction) to form, above the top plate 20a, radiation ranges in which an RFID tag 62 can be read, as explained below. Specifically, a radiation range 31a is formed above the first placing area 21 by the radio wave radiated by the first antenna 31. A radiation range 32a is formed above the second placing area 22 by the radio wave radiated by the second antenna 32.

In the example illustrated in FIG. 2, the second partition plate 24 is provided. However, the second partition plate 24 may be removed. Any number of positions may be disposed between the antennas. Additionally, the first antenna 31 and the second antenna 32 may radiate the radio waves toward any direction. For example, the second antenna 32 may be set behind the top plate 20a of the checkout counter 20 in a state in which the second antenna 32 is erected in parallel to the xz plane and may radiate the radio wave toward the y-axis negative direction. In such a case, the radio wave is radiated to the second placing area 22 along the y-axis negative direction. A radiation range of the radio wave is formed in an area including the second placing area 22.

Movements of commodities by a customer who uses the self-service checkout apparatus 1 are explained with reference to FIG. 3.

First, a customer 50 places a basket 51, in which commodities 60 are stored, in the first placing area 21 of the checkout counter 20.

An RFID tag 62 is attached to each of the commodities 60. The RFID tag 62 has stored therein tag information. The tag information includes a commodity identifier (hereinafter referred to as commodity code as well) for identifying the commodity 60 to which the RFID tag 62 is attached and a tag identifier for identifying each RFID tag. The RFID tag 62 is activated when receiving radio waves radiated by either the first antenna 31 or the second antenna 32 and transmits the tag information stored in the RFID tag 62.

As explained above, the radiation range 31a of the radio wave radiated by the first antenna 31 is formed above the first placing area 21 of the checkout counter 20. Therefore, if the customer 50 places the basket 51 in the first placing area 21, the commodities 60 stored in the basket 51 are included in the radiation range 31a. The RFID tag 62 attached to each of the commodities 60 is activated with the radio wave radiated by the first antenna 31 and transmits the tag information stored by the RFID tag 62 to the first antenna 31. Consequently, in the first placing area 21, the tag information can be collectively read from the commodities 60 placed in the first placing area 21.

Thereafter, the customer 50 takes out the commodity 60 from the basket 51 and places the commodity 60 in the second placing area 22. For example, the customer 50 moves the commodity 60 stored in the basket 51 into a register bag placed in the second placing area 22.

As explained above, the radiation range 32a of the radio wave radiated by the second antenna 32 is formed above a placing area 26 of the checkout counter 20. Therefore, if the customer 50 takes out the commodity 60 from the basket 51 and moves to the second placing area 22, the commodity 60 enters the radiation range 32a. Therefore, if the commodity 60 is moved to the second placing area 22, the RFID tag 62 attached to the commodity 60 receives the radio wave radiated by the second antenna 32 and transmits the tag information stored by the RFID tag 62 to the second antenna 32.

If the POS terminal 10 acquires, via an RFID reader 33 explained below, the tag information received by the first antenna 31 and the second antenna 32, the POS terminal 10 collates a commodity code included in the tag information and a commodity code of a PLU (price lookup) file F1 (FIG. 4) explained blow to acquire commodity information of the pertinent commodity 60. The POS terminal 10 stores the acquired commodity information in a RAM (random access memory) 40c (see FIG. 4) or the like to perform sales registration for the commodity 60.

With the configuration explained above, the self-service checkout apparatus 1 can read, in the second placing area 22, the tag information of the commodity 60 that has not successfully read in the first placing area 21. For example, in a state in which a plurality of commodities 60 are stored in the basket 51, some wireless tags may not be read because of the positions of the commodities 60 in the basket 51. In such a case, with the configuration explained above, the tag information of the commodities 60 that have been moved from the basket 51 can be read one by one in the second placing area 22. Therefore, it is possible to achieve a reduction of the commodities left unread and surely perform sales registration for the commodities 60 purchased by a customer.

A hardware configuration of the self-service checkout apparatus 1 is explained. FIG. 4 is a hardware block diagram of the self-service checkout apparatus 1.

As illustrated in FIG. 4, the self-service checkout apparatus 1 includes a control unit 40, a storage unit 41, and an input and output controller 43.

The control unit 40 includes a CPU (Central Processing Unit) 40a, a ROM (Read Only Memory) 40b, and the RAM 40c. The CPU 40a is connected to the ROM 40b and the RAM 40c via a bus line 42. The CPU 40a executes various programs stored in the ROM 40b and the storage unit 41 and loaded in the RAM 40c. The CPU 40a executes the various programs loaded in the RAM 40c to control the self-service checkout apparatus 1.

The control unit 40 is connected to the storage unit 41 and the input and output controller 43 via the bus line 42.

The storage unit 41 is a nonvolatile memory such as a flash memory in which stored information is retained even if power is turned off, a HDD (Hard Disk Drive), or the like. The storage unit 41 stores, for example, programs including a control program P1. The control program P1 is a program for the CPU 40a to perform the functions of the self-service checkout apparatus 1 described below.

The control program P1 may be stored in the ROM 40b. The control program P1 may be recorded in a computer-readable recording medium such as a CD-ROM, a flexible disk (FD), a CD-R, or a DVD (Digital Versatile Disc) as a installable or executable file. Further, the control program P1 may be stored on a computer connected to a network such as the Internet and downloaded through the network. The control program P1 may be provided or distributed through the network such as the Internet and executed via the network.

The storage unit 41 stores the PLU file F1. The PLU file F1 is a file in which commodity information of the commodities 60 sold in the store is stored. The commodity information includes a commodity code for identifying a type of a commodity, a commodity name, and a price. Since the commodities 60 sold in the store change from day to day, the PLU file F1 is updated at any time by another computer (not shown) connected to the POS terminal 10.

The storage unit 41 stores a member file F2. The member file F2 is a file in which member information concerning customers registered as members is stored. The member information includes a member ID for identifying a customer and a name, an address, and a mail address of the customer.

The input and output controller 43 is connected to the touch panel 3a, the monitor 3b, the cash dispensing machine 34, the card reader 35, and the receipt printer 36. The input and output controller 43 is connected to the RFID reader 33. The input and output controller 43 controls various kinds of hardware based on a command from the control unit 40. The control unit 40, the storage unit 41, the input and output controller 43, the touch panel 3a, the monitor 3b, the cash dispensing machine 34, the card reader 35, and the receipt printer 36 are incorporated in the POS terminal 10. The RFID reader 33, the first antenna 31, and the second antenna 32 are incorporated in the checkout counter 20.

The touch panel 3a detects operation of an operator on various buttons displayed on the monitor 3b and transmits information corresponding to the operation to the control unit 40. A mechanical switch may be provided in the main body 2 of the POS terminal 10 instead of the touch panel 3a.

The monitor 3b displays the various buttons for operating the self-service checkout apparatus 1, commodity information read by the self-service checkout apparatus 1, and the like.

If the customer 50 pays a purchase price of the commodities 60 by cash, the cash dispensing machine 34 receives bills and coins paid by the customer 50 and dispenses the change if necessity.

The card reader 35 reads, from a member card distributed to a customer in advance, a member ID for identifying the customer. If the customer 50 performs credit card settlement or performs settlement with a card in which electronic money is registered, the card reader 35 reads necessary information from the card.

The receipt printer 36 prints a transaction result of the customer 50 on a receipt and issues the receipt.

The RFID reader 33 radiates radio waves via the first antenna 31 and the second antenna 32. The RFID reader 33 acquires tag information of the RFID tag 62 received by the first antenna 31 and the second antenna 32 and outputs the tag information to the POS terminal 10. The RFID reader 33 acquires the tag information to be capable of identifying by which of the first antenna 31 and the second antenna 32 the tag information is received. For example, the RFID reader 33 may add an identifier indicating one of the first and second antennas 31 and 32 to the tag information and output the tag information to the POS terminal 10 together with the identifier.

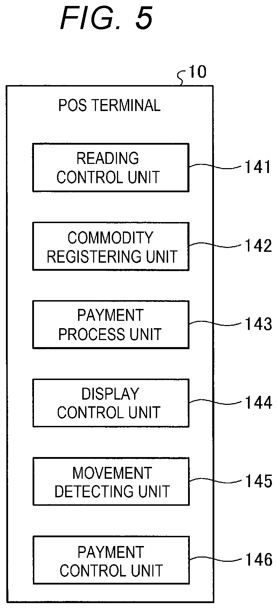

A functional configuration of the POS terminal 10 is explained. FIG. 5 is a functional block of the POS terminal 10.

As illustrated in FIG. 5, the POS terminal 10 includes a reading control unit 141, a commodity registering unit 142, a payment process unit 143, a display control unit 144, a movement detecting unit 145, and a payment control unit 146. A part or all of these functional units may be software components including the control program P1 stored in the ROM 40b and/or the storage unit 41 and executed by the CPU 40a. A part or all of these functional units may be hardware components implemented by dedicated circuits or the like.

The reading control unit 141 controls the RFID reader 33 to read tag information using the first antenna 31 and the second antenna 32. Specifically, the reading control unit 141 controls the RFID reader 33 to transmit radio waves via the first antenna 31 and the second antenna 32 for communication with the RFID tag 62. The reading control unit 141 acquires, via the RFID reader 33, the tag information received by the first antenna 31 and the second antenna 32.

The commodity registering unit 142 performs, based on the tag information read by at least one of the first antenna 31 and the second antenna 32 and acquired by the reading control unit 141, sales registration for the commodities 60 to be purchased by the customer. Specifically, the commodity registering unit 142 searches the PLU file F1 for the commodity codes included in the tag information to acquire the commodity information thereof. The commodity registering unit 142 temporarily stores the acquired commodity information in the RAM 40c or the like to perform sales registration for the commodities 60 read by the checkout counter 20.

The commodity registering unit 142 performs exclusive processing using a tag identifier in order to prevent a commodity code read from the same wireless tag from being registered multiple times. For example, the commodity registering unit 142 registers, together with commodity information, the tag identifier of tag information used for acquiring the commodity information to prevent such duplicated registration.

The payment process unit 143 performs, based on the commodity information of the commodities 60, for which the sales registration has been performed by the commodity registering unit 142, a payment process for the commodities 60 purchased by the customer. For example, the payment process unit 143 calculates a total amount of the commodities 60 based on prices included in the commodity information of the commodities 60, for which the sale registration has been performed by the commodity registering unit 142. The payment process unit 143 subtracts the total amount from a payment amount deposited to the cash dispensing machine 34 and causes the cash dispensing machine 34 to discharge the change.

The display control unit 144 causes the monitor 3b to display various screens. For example, the display control unit 144 causes the monitor 3b to display, as a list, the commodities 60, for which the sales registration is performed by the commodity registering unit 142. The display control unit 144 causes the monitor 3b to display a GUI (graphical user interface) for supporting operation of the self-service checkout apparatus 1 such as an operation button for instructing execution of the payment process by the payment process unit 143. The display control unit 144 causes the monitor 3b to display the total amount and the coin amount calculated by the payment process unit 143, the payment amount deposited to the depositing and dispensing unit 15, and the like.

The self-service checkout apparatus 1 in this embodiment read the tag information in both of the first placing area 21 and the second placing area 22 provided on the checkout counter 20. Accordingly, if the commodities 60 are placed in the first placing area 21, the commodity registering unit 142 performs the registration process based on the tag information read by the first antenna 31. In such a case, a list of the commodity names of the registered commodities 60 is displayed on the monitor 3b. Therefore, some customers may be able to proceed with the payment process without moving the commodities 60 to the second placing area 22.

However, as explained above, the second reading in the second placing area 22 is made to register commodities 60 that have not been successfully read in the first placing area 21. Accordingly, if the payment process is started in a state in which the commodities 60 have not been moved to the second placing area 22, payment is likely to be performed in a state in which not all of the commodities 60 placed in the first placing area 21 have been registered.

Therefore, the self-service checkout apparatus 1 in this embodiment suppresses the payment process from being started until it is detected by the functions of the movement detecting unit 145 and the payment control unit 146 that the commodities 60 have been moved to the second placing area 22. The movement detecting unit 145 and the payment control unit 146 are explained below.

The movement detecting unit 145 detects the movement of the commodities 60 from the first placing area 21 to the second placing area 22. Specifically, the movement detecting unit 145 detects based on tag information acquired by the reading control unit 141 that the commodities 60 have been moved from the first placing area 21 to the second placing area 22. A condition for determining that the commodities 60 have been moved to the second placing area 22 can be optionally set.

For example, on condition that any tag information is received by the second antenna 32, the movement detecting unit 145 may determine that the commodities 60 have been moved from the first placing area 21 to the second placing area 22. In such a case, a commodity that has not been successfully read in the first placing area 21 can be detected by the movement detecting unit 145 that has received the tag information.

For example, on condition that any tag information that has been received by the first antenna 31 is further received by the second antenna 32, the movement detecting unit 145 may determine that the commodities 60 have been moved from the first placing area 21 to the second placing area 22. In other words, when any one of the commodities 60 that has been read in the first placing area 21 is read by the second placing area 22, the movement detecting unit 145 detects the movement of the commodities 60 to the second placing area 22.

For example, on condition that all tag information that has been received by the first antenna 31 is further received by the second antenna 32, the movement detecting unit 145 may determine that the commodities 60 have been moved from the first placing area 21 to the second placing area 22. In other words, when all the commodities 60 that have been read in the first placing area 21 are read in the second placing area 22, the movement detecting unit 145 detects the movement of the commodities 60 to the second placing area 22.

For example, the movement detecting unit 145 may temporarily store the number of tag information or tag identifiers received by the first antenna 31, and on condition that the number of tag information or tag identifiers received by the second antenna 32 reaches or exceeds the temporarily stored number, determine that the commodities 60 have been moved from the first placing area 21 to the second placing area 22. In other words, the movement detecting unit 145 detects the movement of the commodities 60 to the second placing area 22 based on the number of tag information read in the first placing area 21 and the second placing area 22. Therefore, it is possible to reduce a processing load compared with a case where all tag information twice in different areas.

The payment control unit 146 controls the payment process executed by the payment process unit 143. Specifically, the payment control unit 146 suppresses the execution of the payment process until the movement of the commodities 60 to the second placing area 22 is detected by the movement detecting unit 145. Any method may be used for suppressing the payment process.

For example, the payment control unit 146 may suppress the execution of the payment process without disabling the payment process unit 143 itself. For example, the payment control unit 146 may disable a GUI element such as a button for proceeding with the payment process in cooperation with the touch panel 3a, the display control unit 144, and the like to suppress the execution of the payment process.

In this way, the payment control unit 146 suppresses the payment process by the payment process unit 143 until the commodities 60 have been moved to the second placing area 22. Consequently, it is possible to require a customer to move the commodities 60 from the first placing area 21 to the second placing area 22 to proceed with the payment process.

If the tag information is received by the first antenna 31, the payment control unit 146 desirably causes, in cooperation with the display control unit 144, the monitor 3b to display a screen indicating a message or the like for urging the customer to move the commodities 60 to the second placing area 22.

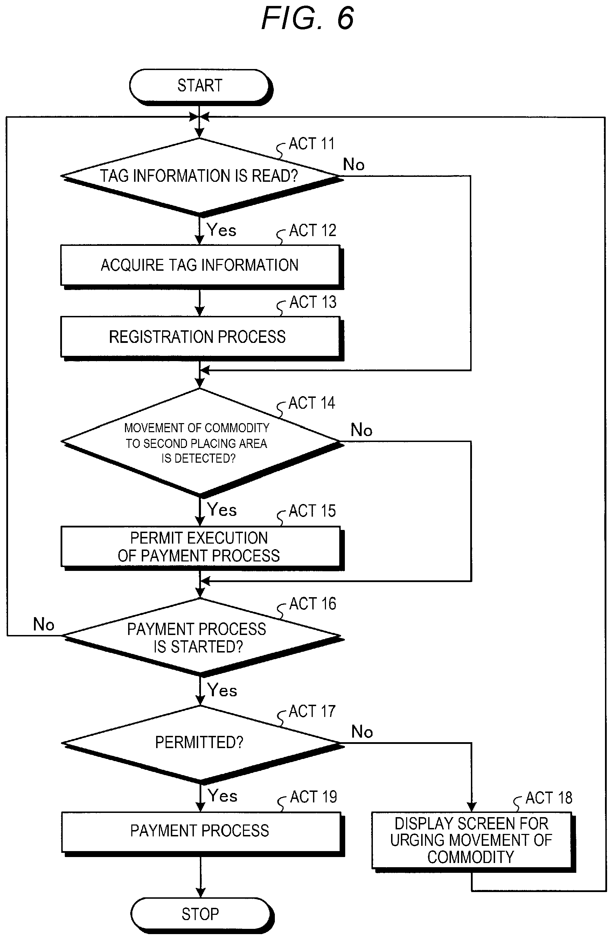

An operation example of the self-service checkout apparatus 1 is explained below. FIG. 6 is a flowchart of commodity sales data processing performed by the self-service checkout apparatus 1. Here, a GUI element such as a button to proceed with the payment process is disabled in a default state.

First, the reading control unit 141 determines whether tag information has been read by the RFID reader 33 (Act 11) . If the RFID reader 33 has not read tag information (No in Act 11), the reading control unit 141 shifts to Act 14.

If determining that the RFID reader 33 reads tag information (Yes in Act 11), the reading control unit 141 acquires the tag information (Act 12). Subsequently, the commodity registering unit 142 performs, based on the tag information acquired in Act 12, sales registration for the commodity 60 to be purchased by the customer (Act 13) and shifts to Act 14.

Subsequently, based on the tag information acquired by the reading control unit 141, a reception source antenna that has received the tag information, and the like, the payment control unit 146 determines whether it is detected that the commodity 60 has been moved to the second placing area 22 (Act 14). If it is detected that the commodity 60 has been moved to the second placing area 22 (Yes in Act 14), the payment control unit 146 permits or enables the execution of the payment process (Act 15) and shifts to Act 16. If the movement to the second placing area 22 is not detected (No in Act 14), the payment control unit 146 shifts to Act 16 while keeping the execution of the payment process disabled.

Subsequently, the payment process unit 143 determines whether a start of the payment process has been instructed by operation of the customer (Act 16). If the start the payment process has not been instructed (No in Act 16), the payment process unit 143 returns the processing to Act 11.

If the start of the payment process has been instructed (Yes in Act 16), the payment process unit 143 determines whether the execution of the payment process is permitted (Act 17). If the execution of the payment process is disabled (No in Act 17), the payment process unit 143 causes the monitor 3b to display a screen for urging the customer to move the commodity 60 to the second placing area 22 (Act 18) and thereafter returns the processing to Act 11.

If the execution of the payment process is permitted (Yes in Act 17), the payment process unit 143 executes the payment process based on commodity information of the commodity 60, for which the sales registration has been performed by the commodity registering unit 142 (Act 19).

As explained above, the self-service checkout apparatus 1 in this embodiment suppresses the execution of the payment process until the commodities 60 are moved to the second placing area 22. Consequently, the self-service checkout apparatus 1 can urge the customer to move the commodities 60 placed in the first placing area 21 to the second placing area 22. Therefore, the self-service checkout apparatus 1 can perform the sales registration and the payment process for the commodities 60 based on the tag information read in both of the first placing area 21 and the second placing area 22. Therefore, it is possible to achieve a reduction of commodities left unread.

The embodiment explained above can be modified and implemented as appropriate by changing a part of the components or the functions of the self-service checkout apparatus 1. Therefore, in the following explanation, some modifications relating to the embodiment explained above are explained. In the following explanation, differences from the embodiment explained above are mainly explained. The modifications explained below may be individually implemented or may be implemented in combination as appropriate.

### (First Modification)

In the embodiment explained above, the payment process is always suppressed if the movement of the commodities 60 to the second placing area 22 cannot be detected. However, even if the movement of the commodity 60 to the second placing area 22 cannot be detected, it is sometimes requested to exceptionally permit execution of the payment process. For example, if a customer is a member of the store, and a follow-up investigation is possible about the customer's suspicious behavior, the payment process may be permitted. Therefore, in a first modification, exceptional processing is allowed if a customer is specified.

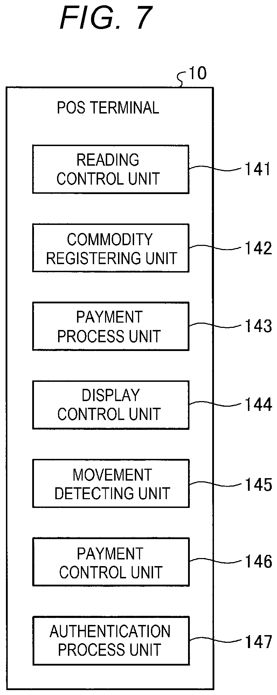

FIG. 7 is a functional block diagram of the POS terminal 10 according to the first modification. As illustrated in FIG. 7, the POS terminal 10 according to this modification includes an authentication process unit 147 in addition to the reading control unit 141, the commodity registering unit 142, the payment process unit 143, the display control unit 144, the movement detecting unit 145, and the payment control unit 146 explained above.

The authentication process unit 147 searches the member file F2 for a member ID that has been read from a member card by the card reader 35 and determines whether the member having the member ID is a valid member. Specifically, if the member ID that has been read from the member card is registered in the member file F2, the authentication process unit 147 determines that the member is the valid member. If determining that the member is the valid member, the authentication process unit 147 enables or permits the execution of the payment process.

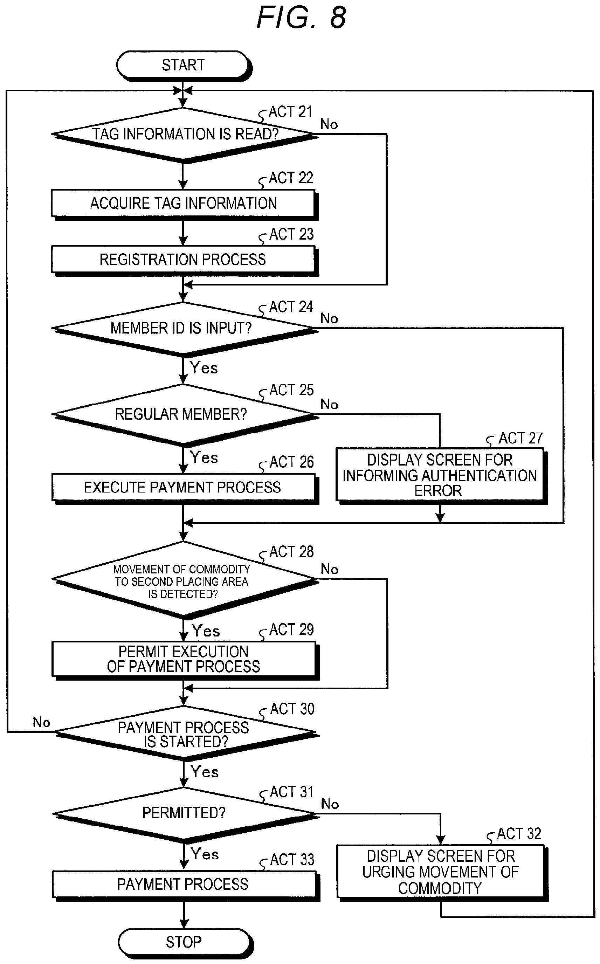

FIG. 8 is a flowchart of commodity sales data processing performed by the self-service checkout apparatus 1 in this modification. Processing in Acts 21 to 23 is the same as the processing in Acts 11 to 13 in FIG. 6 explained above.

In Act 24, the authentication process unit 147 determines whether a member ID has been input via the card reader 35 (Act 24). If any member ID has not been input (No in Act 24), the authentication process unit 147 shifts to Act 28.

If a member ID has been input (Yes in Act 24), the authentication process unit 147 searches the member file F2 for the input member ID to determine whether the member having the member ID is a valid member (Act 25).

If the authentication process unit 147 determines that the member is the valid member (Yes in Act 25), the movement detecting unit 145 permits the execution of the payment process (Act 26) and shifts to Act 28. If the authentication process unit 147 determines that the member is not the valid member (No in Act 25), the payment control unit 146 causes the monitor 3b to display a screen showing an authentication error (Act 27) and thereafter shits to Act 28. The following processing in Acts 28 to 33 is the same as the processing in Acts 14 to 19 in FIG. 6 explained above.

According to the processing explained above, if a customer who is operating the self-service checkout apparatus 1 in this modification is a valid member, the self-service checkout apparatus 1 can proceed with the payment process even when the commodities 60 have not been moved from the first placing area 21 to the second placing area 22.

In the example explained in this modification, the execution of the payment process is permitted on condition that the customer is a valid member. However, any other conditions may be used for permitting the execution of the payment process . For example, the authentication process unit 147 may permit the execution of the payment process only for a specific member among valid members. For example, the authentication process unit 147 may permit the execution of the payment process only for a member having a specific member rank among a plurality of member ranks.

### (Second Modification)

In the example explained above, a customer moves the commodities 60 to the second placing area 22 according to the screen output to the monitor 3b. However, any other guidance methods may be used to encourage the customer to move the commodities 60 to the second placing area 22. For example, if the POS terminal 10 includes a sound output device capable of outputting sound, the movement of the commodities 60 may be guided by sound.

### [Second Embodiment]

A second embodiment is explained. In the first embodiment, the movement of the commodities 60 to the second placing area 22 is detected based on the reading result of the tag information by the second antenna 32. In the second embodiment, the weight of a commodity is measured to detect the movement of the commodities 60 to the second placing area 22. The same components as the components in the first embodiment are denoted by the same reference numerals and signs.

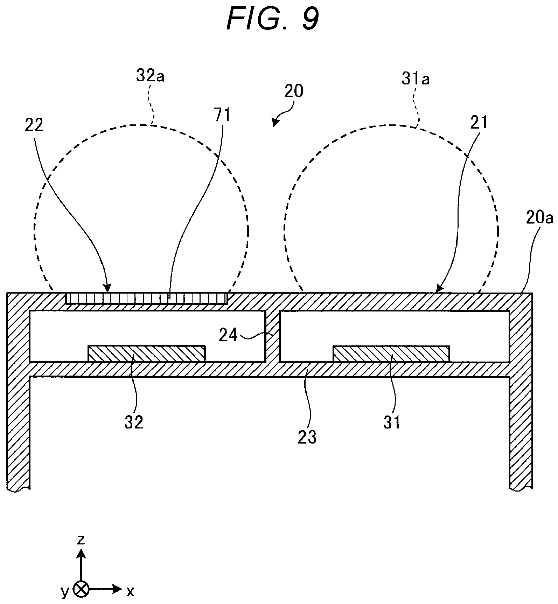

FIG. 9 is a diagram schematically illustrating the internal structure of the checkout counter 20 according to this embodiment. As illustrated in FIG. 9, the checkout counter 20 includes a weight sensor 71 in addition to the components explained with reference to FIG. 2.

The weight sensor 71 is provided in the second placing area 22 of the top plate 20a. The weight sensor 71 measures the weight of the commodities 60 placed in the second placing area 22. Any type of sensor, e.g., a strain gauge, may be used.

In FIG. 9, the weight sensor 71 is provided above the second antenna 32. However, the weight sensor 71 and the second antenna 32 are not limited to this configuration. For example, the weight sensor 71 and the second antenna 32 may be integrated into a single component.

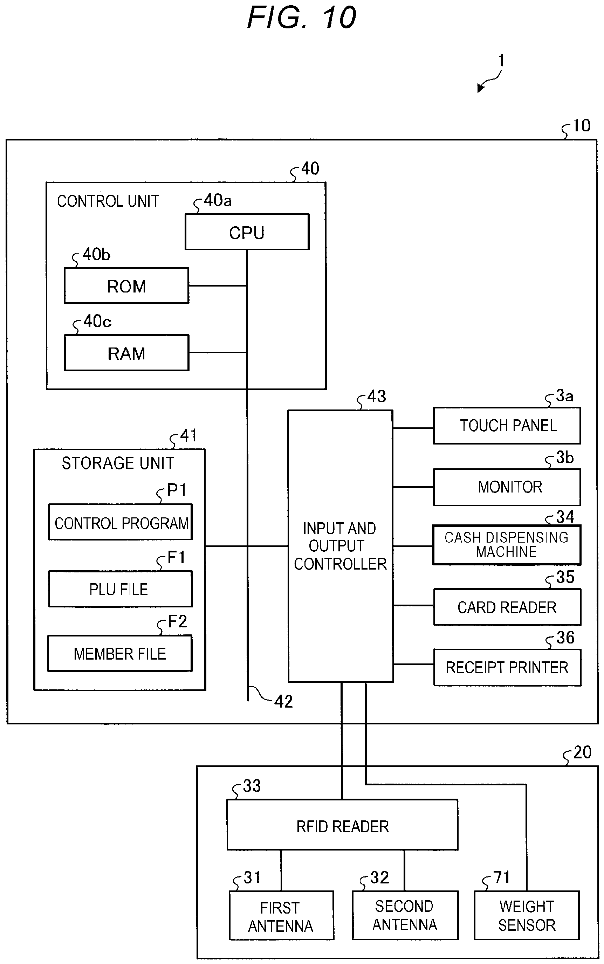

FIG. 10 is a hardware block diagram of the self-service checkout apparatus 1 according to this embodiment. As illustrated in FIG. 10, the self-service checkout apparatus 1 includes the weight sensor 71 in addition to the components explained with reference to FIG. 4. The weight sensor 71 is connected to the input and output controller 43 and outputs a weight measurement result to the control unit 40 (or more particularly in this example, the CPU 40a). The PLU file F1 according to this embodiment stores commodity information including the weight of the commodity 60 in addition to the commodity code, the commodity name, and the price for the commodity 60.

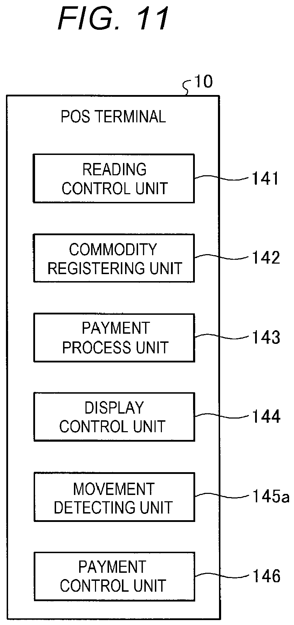

FIG. 11 is a functional block diagram of the POS terminal 10 according to this embodiment. As illustrated in FIG. 11, the POS terminal 10 includes the reading control unit 141, the commodity registering unit 142, the payment process unit 143, the display control unit 144, a movement detecting unit 145a, and the payment control unit 146.

The movement detecting unit 145a is used instead of the movement detecting unit 145 explained above. The movement detecting unit 145a detects that the commodities 60 have been moved from the first placing area 21 to the second placing area 22. Specifically, the movement detecting unit 145a detects, based on the weight measured by the weight sensor 71, that the commodities 60 have been moved from the first placing area 21 to the second placing area 22. Any condition may be used for determining that the commodities 60 have been moved to the second placing area 22.

For example, on condition that the weight measured by the weight sensor 71 changes, the movement detecting unit 145a may determine that the commodities 60 have been moved from the first placing area 21 to the second placing area 22. In other words, the movement detecting unit 145a can detect the movement of the commodities 60 to the second placing area 22 based on a weight change measured by the weight sensor 71 irrespective of reading results of tag information in the first placing area 21 and the second placing area 22.

The movement detecting unit 145a may detect the movement of the commodities 60 from the first placing area 21 to the second placing area 22 further using reading results of tag information in the first placing area 21 and the second placing area 22.

For example, on condition that the total weight of the commodities 60 identified by tag information (more particularly commodity codes in this context) received by the second antenna 32 substantially coincides with the weight measured by the weight sensor 17, the movement detecting unit 145a may determine that the commodities 60 have been moved from the first placing area 21 to the second placing area 22. In such a case, if at least one commodity 60 placed in the first placing area 21 is placed in the second placing area 22, the movement detecting unit 145a can detect the movement to the second placing area 22. The movement detecting unit 145a may specify commodity weight in cooperation with the commodity registering unit 142.

For example, the movement detecting unit 145a may calculate and store the total weight of the commodities 60 identified by tag information (more particularly commodity codes in this context) received by the first antenna 31 and, on condition that the actual weight measured by the weight sensor 71 is equal to or larger than the calculated total weight, determine that the commodities 60 have been moved from the first placing area 21 to the second placing area 22. In such a case, if all the commodities 60 that have been read in the first placing area 21 are placed in the second placing area 22, the movement detecting unit 145a detects the movement to the second placing area 22.

The commodity sales data processing performed by the self-service checkout apparatus 1 in this embodiment is the same as the flowchart of FIG. 6.

As explained above, like the self-service checkout apparatus 1 in the first embodiment, the self-service checkout apparatus 1 in this embodiment can urge the customer to move the commodities 60 placed in the first placing area 21 to the second placing area 22. Therefore, the self-service checkout apparatus 1 in this embodiment can perform the sale registration and the payment process for the commodities 60 based on the tag information read in both of the first placing area 21 and the second placing area 22. Therefore, it is possible to achieve a reduction of commodities left unread.

The embodiment explained above can be modified and implemented as appropriate by changing a part of the components and the functions of the self-service checkout apparatus 1. Therefore, in the following explanation, a modification relating to the embodiment explained above is explained. In the following explanation, differences from the embodiment explained above are mainly explained.

### (Third Modification)

In the embodiment described above, the movement of the commodities 60 from the first placing area 21 to the second placing area 22 is detected based on the weight measured by the weight sensor 71 provided in the second placing area 22. In a third modification, the weight sensor 71 is provided in the first placing area 21 as well and the movement of the commodities 60 from the first placing area 21 to the second placing area 22 is detected based on measurement results of both the weight sensors 71.

In the following explanation, in order to distinguish the weight sensors 71 set in the first placing area 21 and the second placing area 22, the weight sensor 71 set in the first placing area 21 is represented as "first weight sensor 71a". The weight sensor 71 set in the second placing area 22 explained in the embodiment is represented as "second weight sensor 71b".

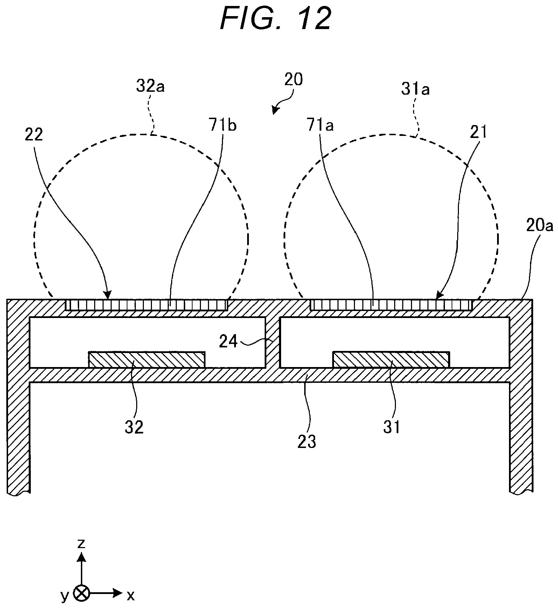

FIG. 12 is a diagram schematically illustrating the internal structure of the checkout counter 20 according to this modification. As illustrated in FIG. 12, the checkout counter 20 includes the first weight sensor 71a in addition to the components explained with reference to FIG. 9.

The first weight sensor 71a is provided in the first placing area 21 of the top plate 20a. In FIG. 12, the first weight sensor 71a is provided above the first antenna 31. However, the first weight sensor 71a and the first antenna 31 are not limited to this configuration. For example, the first weight sensor 71a and the first antenna 31 may be integrated into a single component.

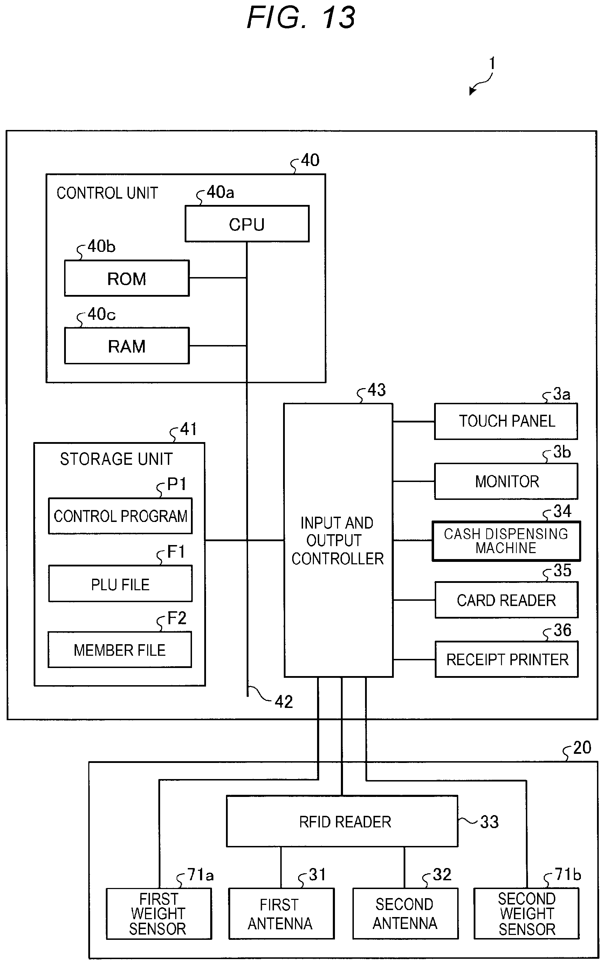

FIG. 13 is a hardware block diagram of the self-service checkout apparatus 1 according to this modification. As illustrated in FIG. 13, the self-service checkout apparatus 1 includes the first weight sensor 71a in addition to the components explained with reference to FIG. 10. The weight sensors 71 are connected to the input and output controller 43 and output weight measurement results to the control unit 40 (more particularly, the CPU 40a in this context). Measurement results of the first weight sensor 71a and the second weight sensor 71b are output so as to be distinguished from each other.

In the self-service checkout apparatus 1 having the configuration explained above, the movement detecting unit 145a detects the movement of the commodities 60 from the first placing area 21 to the second placing area 22 based on the measurement results of the first weight sensor 71a and the second weight sensor 71b. Any condition may be used for determining that the commodities 60 have been moved to the second placing area 22.

For example, on condition that a weight decrease of the weight measured by the first weight sensor 71a substantially coincides with weight increase of the weight measured by the second weight sensor 71b, the movement detecting unit 145a may determine that the commodities 60 have been moved from the first placing area 21 to the second placing area 22. In this case, if at least one commodity 60 is moved from the first placing area 21 to the second placing area 22, the movement detecting unit 145a detects the movement to the second placing area 22.

For example, the movement detecting unit 145a may temporarily store the total weight measured by the first weight sensor 71a and, on condition that the weight measured by the second weight sensor 71b substantially coincides with the temporarily stored weight, determine that the commodities 60 have been moved from the first placing area 21 to the second placing area 22. In this case, if all the commodities 60 have been moved from the first placing area 21 to the second placing area 22, the movement detecting unit 145a detects the movement to the second placing area 22.

The movement detecting unit 145a may detect the movement of the commodities 60 from the first placing area 21 to the second placing area 22 further using the reading results of tag information in the first placing area 21 and the second placing area 22.

For example, on condition that the weight of the commodities 60 calculated based on tag information (more particularly, commodity codes in this context) received by the second antenna 32 substantially coincides with a weight decrease of the weight measured by the first weight sensor 71a, the movement detecting unit 145a may determine that the commodities 60 have been moved from the first placing area 21 to the second placing area 22. In this case, if any one of the commodities 60 is moved from the first placing area 21 to the second placing area 22, the movement detecting unit 145a detects the movement to the second placing area 22. In this case, the second weight sensor 71b may be disabled or removed.

For example, the movement detecting unit 145a temporarily stores the number of tag information received by the first antenna 31 and the weight measured by the first weight sensor 71a. On condition that the number of tag information received by the second antenna 32 and the weight measured by the second weight sensor 71b are equal to or larger than the temporarily stored number and weight, the movement detecting unit 145a may determine that the commodities 60 have been moved from the first placing area 21 to the second placing area 22. In this case, if all the commodities 60 are moved from the first placing area 21 to the second placing area 22, the movement detecting unit 145a detects the movement to the second placing area 22. In this case, the movement detecting unit 145a can use, as an element for determination of movement to the second placing area 22, the number of tag information read in the first placing area 21 and the second placing area 22. Therefore, it is possible to reduce a processing load compared with a case where all of the tag information are acquired in two areas and compared.

As explained above, the self-service checkout apparatus 1 in this modification can urge the customer to move the commodities 60 in the first placing area 21 to the second placing area 22. The self-service checkout apparatus 1 in this modification can perform the sales registration and the payment process for the commodities 60 based on the weights of the commodities placed in both of the first placing area 21 and the second placing area 22. Therefore, it is possible to achieve a reduction of commodities left unread.

The programs executed in the commodity sales data processing apparatuses in the embodiments and the modifications explained above are incorporated in a ROM or the like and provided. The programs executed in the commodity sales data processing apparatuses in the embodiments may be recorded in a computer-readable recording medium such as a CD-ROM, a flexible disk (FD), a CD-R, or a DVD (Digital Versatile Disc) as a file in an installable form or an executable form.

Further, the programs executed in the commodity sales data processing apparatuses in the embodiments and the modifications explained above may be stored on a computer connected to a network such as the Internet and downloaded through the network. The programs executed in the commodity sales data processing apparatuses in the embodiments may be provided or distributed through the network such as the Internet.

The programs executed in the commodity sales data processing apparatuses in the embodiments and the modifications explained above including modules for performing the functional units explained above. The CPU 40a reads out a program from the storage medium and loads the modules explained above onto the RAM 40c.

The several embodiments are explained above. However, the embodiments are presented as examples and are not intended to limit the scope of the invention. These new embodiments can be implemented in other various forms. Various omissions, substitutions, and changes can be made without departing from the scope of the invention as defined by the appended claims. These embodiments and modifications of the embodiments are included in the scope of the invention and included in the inventions described in claims and the scope of equivalents of the inventions.

## Claims

1. A checkout apparatus, comprising:
an input device through which an instruction to start checkout settlement processing is input;
a wireless tag reader configured to read tag information from a wireless tag in a first area and a second area; and
a processor configured to:
register tag information in a memory when the wireless tag reader reads tag information from a wireless tag in either the first area or the second area; and
perform checkout settlement processing based on the registered tag information upon receipt of an input of the instruction to start checkout settlement processing via the input device, wherein
the processor is further configured to determine whether commodities have been moved from the first area to the second area and control the input device to not accept the input of the instruction to start checkout settlement processing until all commodities placed in the first area are determined to have been moved to the second area.

2. The checkout apparatus according to claim 1, wherein the processor determines that a commodity has been moved from the first area to the second area when the wireless tag reader reads a wireless tag in the second area.

3. The checkout apparatus according to claim 1 or 2, wherein the processor determines that a commodity has been moved from the first area to the second area when the wireless tag reader reads a wireless tag in the second area providing tag information matching tag information from a wireless tag read in the first area.

4. The checkout apparatus according to any of claims 1 to 3, further comprising:
a scale in the second area, wherein
the processor determines that the commodities have been moved from the first area to the second area when the scale detects a change in weight.

5. The checkout apparatus according to claim 4, wherein
the processor is further configured to acquire an expected weight of a commodity that has been placed in the second area using tag information, and
the processor determines that all commodities have been moved from the first area to the second area when the scale measures a weight that is substantially identical to a summed total of expected weights of the commodities detected in the first area according to tag information acquired from wireless tags in the first area.

6. The checkout apparatus according to any of claims 1 to 5, wherein the processor determines that the all commodities have been moved from the first area to the second area when the wireless tag reader reads, in the second area, all wireless tags that were read in the first area.

7. The checkout apparatus according to any of claims 1 to 6, wherein the first and second areas are on a countertop.

8. The checkout apparatus according to any of claims 1 to 7, wherein the wireless tag reader has a first antenna and a second antenna respectively positioned to read wireless tags in the first and second areas.

9. The checkout apparatus according to any of claims 1 to 8, wherein
the input device is a touch display showing a button through which the instruction to start checkout settlement processing is input, and
the button is disabled until all commodities are determined to have been moved from the first area to the second area.

10. The checkout apparatus according to any of claims 1 to 9, wherein the input device is between the first and second areas.

11. A method performed by a checkout apparatus having an input device through which an instruction to start checkout settlement processing is input, the method comprising:
reading tag information from a wireless tag attached to a commodity in either a first area or a second area using a wireless tag reader, and then registering the tag information in a memory;
performing checkout settlement processing according to the registered tag information upon receipt of an input of the instruction to start checkout settlement processing via the input device;
determining whether all commodities to be purchased have been moved from the first area to the second area; and
controlling the input device to not accept the input of the instruction until all the commodities are determined to have been moved to the second area.

12. The method according to claim 11, wherein a commodity is determined to have been moved from the first area to the second area when tag information from a wireless tag previously read in the first area is read from a wireless tag in the second area.

13. The method according to claim 11 or 12, wherein all commodities are determined to have been moved from the first area to the second area when all wireless tags read in the first area are also read in the second area.

14. The method according to any of claims 11 to 13, wherein the first and second area are formed on a countertop, wherein preferably the wireless tag reader has first and second antennas respectively under the first and second areas on the countertop.

15. A non-transitory computer readable medium storing a program causing a computer, which has an input device through which an instruction to start checkout settlement processing is input, to execute a method comprising:
reading tag information from a wireless tag in either a first area or a second area using a wireless tag reader, and then registering the tag information in a memory;
performing checkout settlement processing using the registered tag information upon receipt of an input of the instruction to start checkout settlement processing via the input device;
determining whether commodities have been moved from the first area to the second area; and
controlling the input device to not accept the input of the instruction to start checkout settlement process until all commodities placed in the first area are determined to have been moved to the second area.
